# FASCICULE DE BREVET EUROPEEN

(11) **EP 3 283 559 B1**
(45) Date de publication et mention de la délivrance du brevet: **21.07.2021**
(21) Numéro de dépôt: 16717290.7
(22) Date de dépôt: 07.04.2016
(51) Int. Cl.: C08J 9/00, C08J 9/26, H01B 1/20

(54) **MATERIAUX CONDUCTEURS THERMIQUES ET/OU ELECTRIQUES ET LEUR PROCEDE DE PREPARATION**
THERMISCH UND/ODER ELEKTRISCH LEITFÄHIGE MATERIALIEN UND VERFAHREN ZUR HERSTELLUNG DAVON
THERMALLY AND/OR ELECTRICALLY CONDUCTIVE MATERIALS AND METHOD FOR THE PRODUCTION THEREOF

(30) Priorité: 13.04.2015 FR 1553212
(43) Date de publication de la demande: 21.02.2018
(73) Titulaire: Hutchinson, 75008 Paris (FR)
(72) Inventeur: PREBE, Arnaud, 45200 Amilly (FR); DUFOUR, Bruno, 77430 Champagne sur Seine (FR); AYME-PERROT, David, 68330 Huningue (FR); BUREAU, Yannick, 45210 Ferrieres-en-Gatinais (FR); SONNTAG, Philippe, 77210 Avon (FR)
(74) Mandataire: Corizzi, Valérie
(86) Numéro de dépôt international: PCT/EP2016/057555
(87) Numéro de publication internationale: WO 2016/166000

(56) Documents cités:
- FR-A1- 2 759 087
- US-B1- 7 820 328

## Description

L'invention concerne le domaine des matériaux polymériques à très haut taux de charge et à porosité contrôlée. Elle concerne en particulier le domaine des matériaux à très haut taux de charges conductrices thermiques et/ou conductrices électriques. Elle concerne un procédé de fabrication d'un matériau polymérique poreux comprenant un taux de charge élevé. L'invention concerne également les compositions polymériques et les matériaux obtenus par ces procédés, ainsi que leurs utilisations.

### Etat de la technique antérieure

Les matériaux à haute conductivité thermique sont utilisés dans différentes applications. On les retrouve principalement dans des appareils et dispositifs dans lesquels est générée de la chaleur, où ils sont utilisés pour évacuer la chaleur vers l'extérieur, afin d'éviter une augmentation continue de la température et une détérioration de ces équipements.

Par exemple, les appareils utilisant des semi-conducteurs, tels que des ordinateurs, des transistors, des LED, produisent de la chaleur lors de leur fonctionnement et l'efficacité des parties électroniques qui les composent peut être dégradée par cette formation de chaleur. Il est connu d'utiliser des pièces de matériaux thermiquement conducteurs pour évacuer la chaleur formée à l'intérieur de ces appareils.

Dans les applications électroniques notamment, la surface des composants générant de la chaleur est rarement plane et on préfère utiliser un matériau conformable, capable de s'adapter aux formes des éléments entre lesquels il est placé de façon à optimiser le contact entre le matériau thermiquement conducteur et l'élément producteur de chaleur, de telle sorte que le flux de chaleur est facilité. Dans certaines applications telles que le bâtiment, où l'on met en œuvre des pièces de matériau conducteur thermique de grande taille, on cherche à minimiser la masse volumique de ces matériaux, notamment pour des raisons de maniabilité. Dans le domaine aéronautique, on cherche également à minimiser la masse volumique des éléments embarqués, notamment les composants électroniques, qui intègrent des dissipateurs de chaleur faits de matériau conducteur thermique.

Aussi les matériaux conducteurs thermiques doivent présenter une conductivité thermique élevée, mais également, en fonction des applications : une conformabilité élevée, une masse volumique réduite.

Les matériaux polymériques à haute conductivité électrique sont utilisés dans différentes applications. On les retrouve principalement dans la fabrication de câbles électriques, dans des revêtements destinés au blindage électromagnétique, à la protection antistatique, aux revêtements anti-foudre.

De tels matériaux, en fonction de leurs utilisations, doivent présenter une certaine souplesse (câbles électriques), pouvoir s'adapter aux contours de pièces rigides de forme irrégulière, et être suffisamment légers, pour des applications en aéronautique notamment.

Aussi les matériaux conducteurs électriques doivent présenter une conductivité électrique élevée, mais également, en fonction des applications : une souplesse élevée, une conformabilité élevée, une masse volumique réduite.

De façon habituelle, pour réaliser un matériau conducteur thermique ou un matériau conducteur électrique, des charges conductrices thermiques, respectivement conductrices électriques, sont ajoutées dans une matrice de polymère. La conductivité thermique ou électrique du composite résultant de ce mélange dépend principalement du type et de la nature des charges conductrices employées, mais également de la quantité de ces charges présente dans le matériau. En effet la matrice sert principalement à assurer une cohésion de ces charges et n'a généralement pas elle-même de propriétés de conducteur thermique ou électrique. Ainsi, plus la quantité de charges conductrices thermiques ou conductrices électriques présentes dans le composite est élevée, plus la conductivité thermique, respectivement électrique, globale du matériau obtenu sera élevée. Cependant, l'incorporation de charges en quantités élevées dans une matrice de polymère n'est pas dépourvue de difficultés.

Plus on introduit de charges dans une matrice polymérique, plus la viscosité du mélange est élevée, et plus il est difficile de transformer efficacement le mélange par les méthodes de plasturgie usuelles. Ce problème a été résolu de différentes façons dans l'art antérieur : par l'incorporation de charges en quantités limitées dans le composite final ce qui limite également la conductivité obtenue, par l'utilisation de précurseurs de polymères faiblement visqueux qui sont ensuite réticulés, ou encore par la mise en œuvre d'un polymère liant en solution dans un solvant qui est ensuite évaporé.

Ainsi le document US6306957 décrit des compositions polymériques comprenant jusqu'à 90% en volume de charges conductrices thermiques. Ces compositions sont à base de précurseurs siliconés de faibles masses molaires en mélange avec les charges conductrices thermiques. Le précurseur est ensuite réticulé pour assurer la tenue du composite final.

US2012/0025131 décrit une composition polymérique comportant des charges conductrices thermiques ou conductrices électriques. Cette composition est préparée à partir d'une composition polymérique liquide qui peut être composée de précurseurs réactifs du type résine époxyde, uréthane ou silicone réticulés par la suite, ou d'une solution d'un polymère thermoplastique dispersé dans un solvant. Le taux massique de charges n'est pas précisé.

La préparation d'un matériau conducteur thermique par voie solvant présente des problèmes de stockage, de manipulation et de recyclage de quantités importantes de solvants, notamment si l'on utilise des solvants organiques, un tel procédé présente des inconvénients sur le plan environnemental et sanitaire. La fabrication d'un matériau composite polymérique par voie solvant permet éventuellement d'obtenir un matériau poreux, mais dont la porosité est difficile à contrôler. En particulier, l'obtention d'une porosité de taille contrôlée ou d'une porosité continue est difficile à maîtriser. En outre, seuls des films minces (quelques micromètres d'épaisseur) peuvent être produits par cette voie.

Un matériau conducteur thermique préparé à partir de précurseurs qui sont ensuite réticulés n'est pas transformable ni recyclable. Par ailleurs, la variété des bases polymériques qui peuvent être employées dans ces procédés est limitée et les durées de procédé sont longues. Ce type de procédé ne permet pas d'obtenir un matériau poreux. Enfin de tels matériaux sont peu conformables et donc d'un intérêt limité dans certaines applications

WO2005/071001 décrit des compositions thermoplastiques du type PET ou PBT de hautes masses molaires comprenant une charge conductrice thermique, le fluorure de calcium. La composition est préparée par voie fondue. Des pourcentages massiques de charges conductrices allant jusqu'à 70% sont décrits.

WO2006/023860 mentionne également la production par voie fondue de compositions thermoplastiques comprenant jusqu'à 80% en poids d'un nitrure de bore de forme particulière sans que cette possibilité soit illustrée par des exemples. La mise en œuvre du procédé comprend l'utilisation d'une huile, il ne s'agit pas d'un procédé de transformation thermoplastique.

US2010/0204380, WO2009/064883 et WO2009/115512 décrivent un procédé en voie fondue permettant l'obtention d'un composite conducteur thermique. Les taux volumiques de charges conductrices thermiques indiqués sont respectivement, de 70%, 75% et 70%, toutefois, les exemples de réalisation présentent des taux de charges significativement plus faibles.

WO2012/000935 décrit des compositions thermoplastiques comprenant jusqu'à 60% massique de charges conductrices thermiques. US2011/0040007 décrit l'obtention de composite conducteur thermique à base de polymère thermoplastique ayant au maximum 76 % volumique de charge.

La mise en œuvre des procédés de fabrication décrits dans ces documents est rendue difficile par des taux de charge élevés. En outre, les matériaux obtenus ne sont pas poreux.

Pour remédier à ces inconvénients, US2011/009544 décrit un composite conducteur thermique à base de thermoplastique obtenu par voie fondue avec des charges conductrices thermiques fonctionnalisées en surface. Les charges sont fonctionnalisées par des groupements silanes qui permettent leur incorporation en quantités élevées. Toutefois, cette solution présente l'inconvénient de nécessiter la fabrication de charges fonctionnalisées, ce qui représente un coût supplémentaire pour le matériau.

On a constaté que les taux de charges conductrices atteignables en voie fondue avec des polymères classiques et des charges minérales ou carbonées non greffées sont, à ce jour, inférieurs à 80 % volumique. Et de tels taux de charges n'ont été obtenus qu'avec certains polymères, mais les procédés classiques par voie fondue ne permettent pas d'atteindre un taux de charge élevé avec tout type de polymère. Par exemple, le polyacrylonitrile co méthyl acrylate est connu pour être difficilement transformable en voie fondue quand il est pur, aussi ajouter 70% volumique de charge à cette matière est remarquable. De plus, les procédés par voie fondue de l'art antérieur conduisent à un composite dense non poreux.

Le document US7820328 décrit un matériau d'électrode comportant un liant polymérique et une charge conductrice en proportion inférieure à 10% massique. Ce matériau est obtenu en mettant en œuvre une faible quantité d'un polymère sacrificiel (au maximum 5% massique) qui est ensuite décomposé thermiquement pour obtenir l'électrode à caractère faiblement poreux. Il en résulte nécessairement une porosité réduite. Toutefois, le procédé suivi n'est pas explicitement décrit, il est mis en oeuvre en présence de solvant ou par pressage d'une poudre, de façon à former un film de revêtement sur un collecteur de courant. Le matériau est destiné à une application différente de celle de l'invention, une part mineure des charges mises en œuvre sont conductrices électriques. Aucun exemple de réalisation n'illustre la mise en œuvre d'un procédé ou la caractérisation d'un produit.

Le document US2008/0226984 décrit un matériau d'électrode comportant un liant polymérique et une charge conductrice en proportion élevée. Ce matériau est obtenu en mettant en œuvre une faible quantité d'un polymère sacrificiel qui est ensuite décomposé thermiquement pour obtenir l'électrode. Le procédé mis en œuvre fait appel à l'emploi de solvant. Le matériau est destiné à une application différente de celle de l'invention, les charges mises en œuvre sont conductrices électriques mais non thermiques, et l'application ne requiert qu'une conductivité électrique faible.

Dans ces deux documents, le procédé conduit à des matériaux d'électrode sous forme de films minces (environ 20µm). La mise en œuvre de faibles quantités de matériau sacrificiel et d'un procédé par voie solvant ou par pressage de poudre ne permet pas de contrôler la taille ou la continuité de la porosité.

Le document FR 2 759 089 décrit un matériau composite poreux de haute surface spécifique et son procédé de préparation qui met en œuvre une phase polymérique sacrificielle et des charges à haute surface spécifique. Les polymères solubles ou calcinables ne sont pas éliminés dans leur totalité en raison de leur affinité pour les charges choisies, notamment le charbon actif. On constate qu'il subsiste dans le matériau composite plus de 20 % massique de ces polymères sacrificiels.

Le document US-7,820,328 décrit : un matériau d'électrode obtenu à partir d'un mélange d'un polymère liant, d'un polymère sacrificiel et de charges conductrices électriques. Le procédé est mis en œuvre par voie solvant ou par compression de poudre et n'emploie que 1 à 5 % de polymère sacrificiel. Il ne peut pas conduire à un matériau auto-supporté.

L'objectif de l'invention a été de surmonter les problèmes rencontrés lorsque l'on met en œuvre les compositions polymériques conductrices thermiques de l'art antérieur. En particulier, on a cherché à mettre au point des matériaux qui soient préparés par voie fondue, sans solvant, qui soient recyclables et qui incorporent des quantités élevées de charges conductrices thermiques et/ou de charges conductrices électriques. On a cherché à mettre au point un procédé qui puisse être mis en œuvre avec des charges minérales ou des charges carbonées sans qu'une étape de fonctionnalisation de ces charges soit nécessaire. On a mis en œuvre un procédé qui permet d'obtenir un matériau autosupporté, c'est-à-dire un matériau qui n'est pas nécessairement sous forme d'un revêtement appliqué sur un support. Notamment on a obtenu des matériaux présentant à la fois une épaisseur et une cohésion suffisantes pour être autosupportés. Lorsque les matériaux de l'invention sont sous forme de revêtement, le procédé de l'invention permet d'obtenir des matériaux présentant une épaisseur supérieure à celle des matériaux de l'art antérieur.

On a également cherché à mettre en œuvre un procédé qui conduise à un matériau poreux de façon à pouvoir obtenir un matériau d'une densité plus faible par rapport aux procédés de l'art antérieur. On a également cherché à obtenir un matériau qui soit conformable.

### Résumé de l'invention

Un premier objet de l'invention est un procédé de préparation d'un matériau composite poreux comprenant au moins (A) une phase polymérique formant liant et (B) une ou plusieurs charges choisies parmi :
les charges conductrices thermiques présentant une conductivité thermique supérieure ou égale à 5 W/mK, et les charges conductrices électriques présentant une résistivité inférieure ou égale à 0.1 Ohm.cm,
les charges (B) représentant au moins 75%, avantageusement au moins 80% en masse par rapport à la somme des masses de la phase polymérique (A) et des charges (B), ce procédé comprenant les étapes suivantes :
   a) Mélangeage à chaud par voie fondue de la phase polymérique (A), des charges (B), et d'une phase polymérique sacrificielle (C), de façon à obtenir un mélange,
   b) Mise en forme du mélange,
   c) Elimination de la phase polymérique sacrificielle,
et la phase polymérique sacrificielle (C) représente au moins 15 % en masse de la masse totale du mélange de l'étape a).

Selon un mode de réalisation préféré, le matériau composite poreux comprend, en masse par rapport à la masse totale du matériau, de 0 à 5 % d'un ou plusieurs résidus de décomposition de la phase sacrificielle.

Selon un mode de réalisation préféré, la phase polymérique sacrificielle (C) représente de 20 à 80 % en masse de la masse totale du mélange de l'étape a).

Selon un mode de réalisation préféré, l'étape a) est mise en œuvre dans un mélangeur interne ou dans une extrudeuse.

Selon un mode de réalisation préféré, l'étape c) est mise en œuvre par décomposition par voie thermique de la phase polymérique sacrificielle.

Selon un mode de réalisation préféré, la phase polymérique sacrificielle est à base d'au moins un polymère choisi parmi les polyalcènes carbonates, de préférence parmi les polyéthylènes carbonates et les polypropylènes carbonates.

Selon un mode de réalisation préféré, la phase polymérique formant liant est à base d'au moins un polymère choisi parmi : les thermoplastiques, les élastomères, les élastomères thermoplastiques, avantageusement parmi : le polyacrylonitrile, les polyoléfines, les polymères halogénés, les polymères acryliques, les acrylates, les méthacrylates, les vinyl acétates, les polyéthers, les polyesters, les polyamides, les polymères aromatiques, l'acrylonitrile-butadiène hydrogéné, les copolymères d'éthylène et d'un acrylate d'alkyle, le polyisoprène, les caoutchoucs.

Selon une première variante préférée, les charges sont choisies parmi : le nitrure d'aluminium, le nitrure de bore, le nitrure de magnésium et de silicium, le carbure de silicium, le diamant, et leurs mélanges.

Selon une seconde variante préférée, les charges sont choisies parmi : le graphite, le graphène, les nanotubes de carbone (CNT), le noir de carbone, les charges métalliques comme l'aluminium, le cuivre ou l'argent et leurs mélanges.

Selon un mode de réalisation préféré, l'étape b) comporte un façonnage sous forme de film.

Selon un mode de réalisation préféré, le procédé comporte en outre à l'issue de l'étape c) une étape d) de compression.

L'invention a encore pour objet un matériau composite poreux susceptible d'être obtenu par le procédé décrit en résumé ci-dessus, et de façon plus détaillée ci-dessous, qui présente la composition suivante, en masse par rapport à la masse totale du matériau :
- 3 à 25 % d'au moins un polymère choisi parmi les polymères thermoplastiques, les élastomères et les thermoplastiques élastomères,
- 75 à 97 % d'au moins une charge choisie parmi les charges conductrices thermiques présentant une conductivité thermique supérieure ou égale à 5 W/mK, et les charges conductrices électriques présentant une résistivité inférieure ou égale à 0,1 Ohm.cm,
- 0 à 5 % d'un ou plusieurs additifs ou résidus de décomposition de la phase sacrificielle.

Selon un mode de réalisation préféré, le matériau est choisi parmi un matériau autosupporté et un revêtement d'une épaisseur supérieure ou égale à 250 µm.

Selon un mode de réalisation préféré, le matériau est susceptible d'être obtenu par un procédé de préparation d'un matériau composite poreux, comportant en outre à l'issue de l'étape c) une étape d) de compression, ce matériau comprenant une matrice polymérique à base de polymère choisi parmi les polymères thermoplastiques, les élastomères et les thermoplastiques élastomères, des charges conductrices thermiques, et présentant une conductivité thermique dans au moins une direction supérieure ou égale à 15 W/m.K.

L'invention a également pour objet une composition polymérique susceptible d'être obtenue à l'issue de l'étape a) ou de l'étape b) du procédé de préparation d'un matériau composite poreux, cette composition comprenant au moins :
(A) une phase polymérique à base de polymères choisis parmi les polymères thermoplastiques, les élastomères et les thermoplastiques élastomères,
(B) une ou plusieurs charges choisies parmi les charges conductrices thermiques présentant une conductivité thermique supérieure ou égale à 5 W/mK, et les charges conductrices électriques présentant une résistivité inférieure ou égale à 0,1 Ohm.cm,
(C) une phase polymérique sacrificielle,
la ou les charges (B) représentant au moins 75%, avantageusement au moins 80% en masse par rapport à la somme des masses du polymère (A) et des charges (B), la phase polymérique sacrificielle (C) représentant au moins 15 % en masse par rapport à la somme des masses de (A), (B) et (C).

L'invention a encore pour objet un procédé de fabrication d'un matériau carboné poreux conducteur thermique et/ou conducteur électrique, ce procédé comportant la mise en œuvre du procédé de préparation d'un matériau composite poreux et comportant en outre à l'issue de ce procédé au moins une étape e) de pyrolyse ou de graphitisation.

### Description détaillée

Ce résultat a été obtenu au moyen d'une méthode permettant d'incorporer, directement en voie fondue et par les méthodes de transformation plastique classiques, de très hauts taux de charges minérales ou carbonées conductrices thermiques et/ou conductrices électriques, supérieurs à 80% en masse dans le matériau final. Ce procédé permet d'obtenir un matériau poreux et de contrôler la porosité au sein du produit final. Ce résultat est obtenu en utilisant une phase polymère, qui forme le liant du matériau final, en combinaison avec une phase sacrificielle. La composition est choisie au regard du procédé de fabrication employé et de l'application finale du matériau. Le procédé de l'invention permet également d'orienter les charges avec un facteur de forme, en s'appuyant sur les paramètres de mise en œuvre et, le cas échéant, sur une étape additionnelle de recompression. Le procédé de l'invention a permis de produire en voie fondue des matériaux conducteurs thermiques et/ou conducteurs électriques qui contiennent un taux de charges minérales ou carbonées supérieur à 80% en masse sans modification au préalable de la surface des charges ni utilisation d'agent de couplage ou de solvant, ces matériaux étant utilisables en l'état.

Le mélange, la dispersion et la répartition homogène du polymère liant et de la phase sacrificielle et des différentes charges minérales ou carbonées sont assurés par la mise en œuvre du procédé en voie fondue. Une éventuelle pyrolyse ou graphitisation du polymère liant est possible dans un second temps pour optimiser les performances, en fonction de l'application envisagée. Le contrôle de la porosité en termes de taille, de volume et de morphologie est assuré par le contrôle des paramètres de mélange (profil de vis, etc...) au cours de la mise en œuvre du procédé. Dans un second temps, le matériau peut être soumis à une étape de compression qui entraine une réduction du volume poreux. Le contrôle de la porosité est adapté en fonction de l'application envisagée.

Dans la présente description, l'expression « polymère » désigne aussi bien des homopolymères que des copolymères. Elle inclut les mélanges de polymères, les oligomères, les mélanges de monomères, d'oligomères et de polymères.

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

### - La phase polymérique formant liant :

Le matériau de l'invention est notamment constitué d'une phase polymérique formant liant et assurant sa cohésion. La phase polymérique peut être de toute nature dès lors qu'elle peut être transformée par voie fondue et qu'elle est compatible avec la phase sacrificielle choisie.

La phase polymérique formant liant présente avantageusement une température de fusion inférieure d'au moins 20°C par rapport à la température de décomposition de la phase sacrificielle de façon à permettre la transformation par voie fondue du mélange. La phase polymérique formant liant est solide à température ambiante (aux environs de 20-25°C) puisqu'elle doit pouvoir être mise en forme et constituera le liant du matériau final.

La compatibilité entre la phase polymérique formant liant et la phase polymérique sacrificielle est évaluée de façon bien connue de l'homme du métier en effectuant le mélange des matériaux par voie fondue et en observant s'il se produit une séparation de phase ou si le mélange est sensiblement homogène. Pour mettre en œuvre le procédé et obtenir un matériau satisfaisant il est nécessaire d'éviter une macroséparation de phase entre le polymère liant et le polymère sacrificiel lors de la mise en œuvre, macroséparation qui se traduirait par la présence d'une phase pure de polymère non dispersée de dimension supérieure à quelques dizaines de µm.

Pour la réalisation de ce mélange, différents paramètres permettent, de façon bien connue, de moduler la compatibilité entre les deux phases. On peut citer par exemple et de façon non limitative : choix de l'équipement, tel que profil de vis ; proportion des phases ; agent compatibilisant. On peut se reporter à un ouvrage général comme : "Mixing and Compounding of Polymers Theory and Practice", 2nd edition, Ica Edition, Manas-Zloczower, qui décrit de façon détaillée les principales connaissances en matière de mélange des polymères.

Le choix des deux phases permet de contrôler la mise en œuvre du procédé, mais aussi les propriétés du matériau final, telles que son intégrité, sa porosité, sa conformabilité.

La nature du matériau qui constitue la phase polymérique formant liant est choisie en fonction des propriétés finales que l'on attend du matériau, comme par exemple sa plasticité, ses propriétés mécaniques.

Selon un mode de réalisation de l'invention, on met en œuvre dans la phase polymérique formant liant des polymères pyrolysables et/ou graphitisables. Après une étape supplémentaire de pyrolyse ou de graphitisation, ces polymères permettent d'obtenir des matériaux à structure carbonée dotés d'une conductivité thermique et/ou électrique.

La phase polymérique formant liant comprend des polymères et éventuellement des additifs. De préférence, les polymères représentent au moins 75 % en masse de la phase polymérique formant liant, avantageusement au moins 90%.

Avantageusement, les polymères mis en œuvre dans le procédé de l'invention et entrant dans la composition du matériau final (avant une éventuelle pyrolyse ou graphitisation) sont choisis parmi : les thermoplastiques, les élastomères et les thermoplastiques élastomères. On peut citer par exemple : le polyacrylonitrile, les polyoléfines, les polymères halogénés, les polymères acryliques, acrylates, méthacrylates, les vinyl acétates, les polyéthers, les polyesters, les polyamides, les polymères aromatiques ou encore les polymères élastomères comme par exemple l'acrylonitrile-butadiène hydrogéné (HNBR), les copolymères d'éthylène et d'un acrylate d'alkyle, le polyisoprène ou autres caoutchoucs.

Avantageusement, la phase polymérique formant liant est à base d'au moins un polymère choisi parmi : les thermoplastiques, les élastomères, les élastomères thermoplastiques, ce qui signifie que les polymères thermoplastiques, les élastomères et les thermoplastiques élastomères représentent au moins 95 % en masse des polymères de la phase polymérique formant liant, avantageusement au moins 98%.

Selon un mode de réalisation préféré de l'invention, la phase polymérique formant liant comporte au moins 50 %, préférentiellement au moins 90%, encore mieux, au moins 95% en masse d'au moins un polymère choisi parmi le polyacrylonitrile, l'acrylonitrile-butadiène hydrogéné et leurs mélanges.

Parmi les additifs susceptibles d'être mis en œuvre dans la phase polymérique formant liant, on peut mentionner les additifs qui sont choisis pour leur fonction dans le matériau final comme par exemple : des agents améliorant la tenue au feu ou à l'oxydation ou encore des agents de réticulation, comme les composés organiques bi-fonctionnels, les peroxydes organiques ou des composés soufrés (pour la réticulation des caoutchoucs), des co-agents comme le tri-allyl cyanurate. L'utilisation de ces additifs est utile sans être nécessaire à l'invention et dépend directement de l'application visée.

### - La phase polymérique sacrificielle :

La phase polymérique sacrificielle est composée de matériaux qui ont la propriété de se décomposer lors de l'application d'une contrainte externe choisie, comme par exemple par élévation de la température ou par dissolution dans un solvant. L'élimination ou l'extraction de la phase sacrificielle doit pouvoir être mise en œuvre sans impacter le reste du matériau. Il est préférable d'utiliser comme matière sacrificielle un composé laissant peu ou pas de résidus lors de la décomposition.

Avantageusement, la phase polymérique sacrificielle est solide à température ambiante (aux environs de 20-25°C) de façon à permettre la mise en forme de la composition.

De préférence, on choisit une phase sacrificielle qui peut être extraite par décomposition thermique, et on privilégie des polymères ayant une température de dégradation franche connus de la littérature, en s'assurant que la température de dégradation de la phase sacrificielle est inférieure d'au moins 20°C par rapport à la température de dégradation du ou des polymère(s) choisi(s) pour la phase polymérique formant liant. Parmi les polymères susceptibles d'être éliminés par élévation de la température, on peut citer les polyalcènes carbonates, comme par exemple les polyéthylènes carbonates et les polypropylènes carbonates. Généralement, ces matériaux présentent l'avantage de se décomposer avec une expansion volumique modérée ou nulle. Ainsi, le volume de la pièce mise en forme n'est pas ou peu affecté par l'étape de décomposition de la phase sacrificielle. En présence de certaines charges telles que le graphite, la mise en œuvre de polyalcènes carbonates peut néanmoins parfois conduire à une expansion volumique. Pour améliorer la fluidité du matériau polymérique intermédiaire et faciliter la mise en œuvre du procédé, de façon connue de l'homme du métier, on peut utiliser un mélange de polyalcènes carbonates de masses molaires différentes.

Selon un autre mode de réalisation, la phase polymérique sacrificielle peut être extraite par un solvant et est à base d'au moins un polymère sacrificiel extractible par voie liquide, de préférence choisi parmi : les polyéthylène glycols, les polypropylène glycols et leurs mélanges.

La phase polymérique sacrificielle comprend des polymères et éventuellement des additifs. De préférence, les polymères représentent au moins 95 % en masse de la phase polymérique sacrificielle, avantageusement au moins 98%.

Avantageusement, la phase polymérique sacrificielle est à base d'au moins un polymère choisi parmi les polyalcènes carbonates, ce qui signifie que les polyalcènes carbonates représentent au moins 95 % en masse de la phase polymérique sacrificielle, avantageusement au moins 98%.

Selon un mode de réalisation préféré de l'invention les polyéthylènes carbonates et les polypropylènes carbonates représentent au moins 95 % en masse de la phase polymérique sacrificielle, avantageusement au moins 98%.

Parmi les additifs susceptibles d'être mis en œuvre dans la phase polymérique sacrificielle, on peut citer les générateurs photoacides qui agissent comme additifs d'aide à la décomposition des phases sacrificielles. De tels produits sont décrits dans Cupta M., Jayachandran P., Khol P., Photoacid generators for catalytic decomposition of polycarbonate, Journal of applied polymer science, 2007, Vol. 105, p.2655-2662, pour le polypropylène carbonate par exemple. L'utilisation de ces photoacides dans la phase polymérique sacrificielle permet de diminuer les températures de dégradation. Ils sont donc utiles sans être nécessaires à l'invention.

### - Les charges:

Suivant les propriétés attendues du matériau polymérique composite, on met en œuvre des charges conductrices thermiques, des charges conductrices électriques ou des charges présentant les deux propriétés.

### Les charges conductrices thermiques :

Selon un premier mode de réalisation de l'invention, on met en œuvre dans le procédé et le matériau composite de l'invention des charges conductrices thermiques. La charge thermiquement conductrice est choisie parmi celles ayant une conductivité thermique supérieure ou égale à 5 W/mK.

La conductivité thermique intrinsèque de charges connues est décrite par exemple dans "Thermal conductivity of Nonmetallic Solids," Y. S. Touloukian, R. W. Powell, C. Y. Ho, and P. G. Klemans, IFI/Plenum: New York-Washington, 1970 ou dans "Thermal Conductivity-Theory, Properties and Applications," T. M. Tritt, Ed., Kluwer Academic/Plenum Publishers: New York, 2004.

De préférence, la charge thermiquement conductrice a une conductivité thermique intrinsèque supérieure ou égale à 10 W/mK, de préférence encore supérieure ou égale à 25 W/mK, avantageusement supérieure ou égale à 50 W/mK.

Des charges thermiquement conductrices qui peuvent être mises en œuvre dans l'invention sont par exemple : AIN (nitrure d'aluminium), BN (nitrure de bore), MgSiN2 (nitrure de magnésium et de silicium), SiC (carbure de silicium), le graphite, le graphène, les nanotubes de carbone (CNT), les nanofibres de carbone, le noir de carbone, le diamant, les charges métalliques comme l'aluminium, le cuivre ou l'argent ou une combinaison de ceux-ci.

Il faut souligner que certaines de ces charges, comme les charges métalliques, le graphite, le graphène, les nanotubes de carbone (CNT), les nanofibres de carbone, le noir de carbone, peuvent également être conductrices électriques. Lorsque l'on souhaite obtenir un matériau électriquement isolant, on évite d'employer de telles charges. Dans ce cas, on utilise de préférence une charge présentant une résistivité supérieure ou égale à 10³ Ohm.cm, comme le nitrure d'aluminium, le nitrure de bore, le nitrure de magnésium et de silicium ou le carbure de silicium.

### Les charges conductrices électriques :

La charge électriquement conductrice est choisie parmi celles présentant une résistivité inférieure ou égale à 0,1 Ohm.cm.

Des charges électriquement conductrices qui peuvent être mises en œuvre dans le procédé et le matériau de l'invention sont par exemple : le graphite, le graphène, les nanotubes de carbone (CNT), les nanofibres de carbone, le noir de carbone, les charges métalliques comme l'aluminium, le cuivre ou l'argent, ou une combinaison de ceux-ci.

### - Les additifs :

Outre les additifs destinés à modifier les propriétés du matériau final, en particulier avant pyrolyse, et ceux destinés à faciliter l'élimination de la phase sacrificielle, il est possible d'ajouter à la composition des additifs spécifiques afin d'améliorer et/ou optimiser le procédé de fabrication des matériaux, comme par exemple des agents compatibilisants. Ces additifs facilitant la mise en œuvre du procédé peuvent être incorporés préalablement dans l'une ou l'autre des phases polymériques, ou avec les charges, ou ils peuvent être incorporés de façon indépendante.

### - Le procédé de préparation d'un matériau composite poreux :

Le procédé de l'invention repose sur l'utilisation d'une phase polymérique sacrificielle dans un procédé en voie fondue, permettant à la fois une plastification, une meilleure fluidité de la matière pendant la mise en œuvre et une cohésion à l'état fondu mais aussi la création d'une porosité contrôlée. Par exemple, une porosité ouverte pourra être recherchée afin de réduire la densité du matériau tout en assurant une conductivité thermique importante. La porosité peut être contrôlée directement par la quantité de matière sacrificielle introduite ou par une éventuelle compression du matériau après mise en forme et élimination de la phase sacrificielle. Il est à noter que le procédé selon l'invention permet à la fois des temps de procédé courts, typiques des procédés de plasturgie conventionnels, comme l'extrusion, mais aussi l'utilisation d'étapes nécessitant une cohésion à l'état fondu comme l'extrusion calandrage. Il faut aussi souligner que la capacité du mélange à être transformé est maintenue après mise en forme, tant qu'aucune extraction ou pyrolyse ou graphitisation n'a été effectuée.

Ce procédé comprend les étapes suivantes :
a) Mélangeage à chaud par voie fondue de la phase polymérique formant liant (A), des charges (B), et de la phase polymérique sacrificielle (C) de façon à obtenir un mélange,
b) Mise en forme du mélange,
c) Elimination de la phase polymérique sacrificielle.

L'étape a) peut être mise en œuvre de façon connue dans tout type d'équipement permettant d'homogénéiser la composition tout en la chauffant. On peut citer notamment un mélangeur interne ou une extrudeuse. Par rapport aux procédés antérieurs, le procédé de l'invention présente de nombreux avantages et en particulier l'étape de mélangeage est mise en œuvre sans solvant. La phase polymérique formant liant est dispersée de manière homogène dans la phase polymérique sacrificielle continue, ou bien elle forme une phase co-continue avec cette dernière.

Pour faciliter l'obtention d'un mélange homogène, on peut par exemple mettre en œuvre la phase polymérique sacrificielle sous forme de granulés de taille moyenne en nombre supérieure à 1mm.

Le chauffage est contrôlé de façon à porter les phases polymériques à la fusion sans décomposer la phase sacrificielle ou à une température à laquelle la phase sacrificielle se décompose très lentement (sur une durée supérieure à 1h). Avantageusement, le chauffage à l'étape a) est contrôlé pour porter le mélange à une température au moins supérieure de 20°C à la température de transition vitreuse ou de fusion des polymères de la phase polymérique formant liant.

L'étape de mise en forme est adaptée en fonction de la forme finale et des dimensions que l'on souhaite conférer à l'objet. La mise en forme peut consister par exemple en une ou plusieurs étapes choisies parmi : l'extrusion, le soufflage, l'injection, le moulage, le calandrage, le malaxage et leurs combinaisons.

Un avantage du procédé de l'invention réside dans la possibilité, lorsque l'on utilise des charges avec un facteur de forme, d'orienter ces charges. La création d'une porosité contribue en elle-même à l'orientation de ces charges. Par ailleurs, le passage au travers d'une filière d'extrusion dans des conditions de pression choisies permet de conférer une orientation à de telles charges. La compression et/ou le calandrage peuvent également contribuer à l'orientation des charges. Une telle orientation de charges dans le matériau composite poreux se traduit par une asymétrie des propriétés, et permet d'augmenter les propriétés de conductivité thermique ou de conductivité électrique dans une direction du matériau.

Le procédé de l'invention permet également d'obtenir des objets de formes variées, autosupportés, et pas uniquement des revêtements attachés à un support.

Préférentiellement, la phase polymérique sacrificielle est éliminée sensiblement sans laisser de résidus. Cette étape peut être réalisée de façon connue par élévation de température, par exemple dans une étuve. Elle peut également être réalisée par d'autres moyens, comme par exemple par dissolution de la phase sacrificielle à l'aide d'un solvant.

Outre les étapes décrites ci-dessus, le procédé de l'invention peut comporter d'autres étapes. En particulier, selon un mode de réalisation de l'invention, il comporte une ou plusieurs étapes de mise en forme à l'issue de l'étape c), et notamment un découpage du matériau aux dimensions souhaitées, une compression qui permet de réduire la porosité. La compression peut par exemple être réalisée au moyen d'une presse à plateaux ou par calandrage. Une éventuelle réticulation de la phase formant liant est possible pour optimiser les propriétés mécaniques et la cohésion de la composition si une transformation ultérieure n'est pas envisagée.

### - Le matériau composite poreux

Le matériau composite poreux de l'invention comprend au moins une phase polymérique à base de polymère choisi parmi les polymères thermoplastiques, les élastomères et les thermoplastiques élastomères, et au moins une charge choisie parmi les charges conductrices thermiques et les charges conductrices électriques, la ou les charge(s) représentant au moins 75%, avantageusement au moins 80% en masse par rapport à la masse totale du matériau. Avantageusement la ou les charge(s) représentent au moins 60% en volume par rapport au volume total du matériau.

De façon avantageuse, le matériau composite poreux comprend, ou mieux consiste essentiellement en, en masse par rapport à la masse totale du matériau :
- 3 à 25 % d'au moins un polymère choisi parmi les polymères thermoplastiques, les élastomères et les thermoplastiques élastomères,
- 75 à 97 % d'au moins une charge choisie parmi les charges conductrices thermiques et les charges conductrices électriques,
- 0 à 5 % d'un ou plusieurs additifs ou de résidus de décomposition de la phase sacrificielle.

Préférentiellement, le matériau composite poreux comprend, ou mieux consiste essentiellement en, en masse par rapport à la masse totale du matériau :
- 3 à 20 % d'au moins un polymère choisi parmi les polymères thermoplastiques, les élastomères et les thermoplastiques élastomères,
- 80 à 97 % d'au moins une charge choisie parmi les charges conductrices thermiques et les charges conductrices électriques,
- 0 à 2 % d'un ou plusieurs additifs ou de résidus de décomposition de la phase sacrificielle.

Encore plus préférentiellement, le matériau composite poreux comprend, ou mieux consiste essentiellement en, en masse par rapport à la masse totale du matériau :
- 4 à 10 % d'au moins un polymère choisi parmi les polymères thermoplastiques, les élastomères et les thermoplastiques élastomères,
- 90 à 96 % d'au moins une charge choisie parmi les charges conductrices thermiques et les charges conductrices électriques,
- 0 à 1 % d'un ou plusieurs additifs ou de résidus de décomposition de la phase sacrificielle.

Selon un mode de réalisation de l'invention, le matériau composite poreux comprend, ou mieux consiste essentiellement en, en masse par rapport à la masse totale du matériau :
- 3 à 25 % d'au moins un polymère choisi parmi : le polyacrylonitrile, les polyoléfines, les polymères halogénés, les polymères acryliques, les acrylates, les méthacrylates, les vinyl acétates, les polyéthers, les polyesters, les polyamides, les polymères aromatiques, l'acrylonitrile-butadiène hydrogéné, les copolymères d'éthylène et d'un acrylate d'alkyle, le polyisoprène, les caoutchoucs,
- 75 à 97 % d'au moins une charge choisie parmi : le nitrure d'aluminium, le nitrure de bore, le nitrure de magnésium et de silicium, le carbure de silicium, le diamant, et leurs mélanges,
- 0 à 5 % d'un ou plusieurs additifs ou de résidus de décomposition de la phase sacrificielle.

Selon un mode de réalisation avantageux de l'invention, le matériau composite poreux comprend, ou mieux consiste essentiellement en, en masse par rapport à la masse totale du matériau :
- 3 à 20 % d'au moins un polymère choisi parmi : le polyacrylonitrile, les polyoléfines, les polymères halogénés, les polymères acryliques, les acrylates, les méthacrylates, les vinyl acétates, les polyéthers, les polyesters, les polyamides, les polymères aromatiques, l'acrylonitrile-butadiène hydrogéné, les copolymères d'éthylène et d'un acrylate d'alkyle, le polyisoprène, les caoutchoucs.
- 80 à 97 % d'au moins une charge choisie parmi : le nitrure d'aluminium, le nitrure de bore, le nitrure de magnésium et de silicium, le carbure de silicium, le diamant, et leurs mélanges,
- 0 à 2 % d'un ou plusieurs additifs ou de résidus de décomposition de la phase sacrificielle.

Selon un mode de réalisation préféré de l'invention, le matériau composite poreux comprend, ou mieux consiste essentiellement en, en masse par rapport à la masse totale du matériau :
- 4 à 10 % d'au moins un polymère choisi parmi : le polyacrylonitrile, les polyoléfines, les polymères halogénés, les polymères acryliques, les acrylates, les méthacrylates, les vinyl acétates, les polyéthers, les polyesters, les polyamides, les polymères aromatiques, l'acrylonitrile-butadiène hydrogéné, les copolymères d'éthylène et d'un acrylate d'alkyle, le polyisoprène, les caoutchoucs,
- 90 à 96 % d'au moins une charge choisie parmi : le nitrure d'aluminium, le nitrure de bore, le nitrure de magnésium et de silicium, le carbure de silicium, le diamant, et leurs mélanges,
- 0 à 1 % d'un ou plusieurs additifs ou de résidus de décomposition de la phase sacrificielle.

Avantageusement, ce matériau est obtenu à l'issue du procédé décrit ci-dessus.

Le matériau de l'invention présente une proportion de charges supérieure à celles connues de l'art antérieur pour des compositions à base de polymères de même nature. Il présente donc des propriétés de conductivité thermique et/ou de conductivité électrique améliorées par rapport aux compositions de l'art antérieur. Le matériau composite poreux de l'invention présente une porosité et une densité qui peuvent être contrôlées. En effet, plusieurs paramètres du procédé permettent de modifier ces propriétés du matériau : les proportions du mélange initial de (A), (B), (C) et éventuellement, le mode de mise en forme, une éventuelle étape de compression. La porosité peut ainsi être contrôlée en termes de taille, de morphologie et de quantité des pores. En fonction des applications et des contraintes liées à l'utilisation, on choisit de favoriser une densité plus ou moins élevée du matériau. Une compression extrême peut permettre d'atteindre une porosité très faible.

Par matériau composite poreux on entend un matériau dont au moins 1% en volume, avantageusement au moins 10% en volume, est constitué de pores.

Avantageusement, le matériau de l'invention présente une porosité continue.

Selon un mode de réalisation de l'invention, la porosité représente de 10 à 70% en volume par rapport au volume total du matériau, préférentiellement de 20 à 60%.

Le matériau est mis en forme en fonction de l'utilisation envisagée, notamment sous forme de feuilles, de films, mais aussi de gaines, de câbles, de revêtements, de granulés, de boîtiers.

Avantageusement, le matériau de l'invention est autosupporté.

Par rapport aux matériaux composites poreux décrits dans l'art antérieur, le matériau de l'invention présente l'avantage de ne pas être nécessairement sous forme d'un revêtement. Par rapport aux matériaux obtenus par voie solvant, qui peuvent également être poreux, le matériau de l'invention présente l'avantage de pouvoir présenter des formes variées, d'épaisseur importante. En effet, par voie solvant, on a accès à des matériaux sous forme de films de quelques centaines de microns d'épaisseur maximale, tandis que les matériaux de l'invention peuvent être de toutes formes et de toutes dimensions. Dans l'hypothèse où le matériau de l'invention est sous forme de film, par exemple de film de revêtement, avantageusement, il est d'une épaisseur supérieure ou égale à 250 µm, préférentiellement supérieure ou égale à 500 µm, avantageusement encore supérieure ou égale à 1 mm, encore mieux, supérieure ou égale à 2,5 mm.

Le matériau de l'invention se caractérise avantageusement en ce qu'il présente dans toutes les directions de l'espace une épaisseur supérieure ou égale à 250 µm, préférentiellement supérieure ou égale à 500 µm, avantageusement encore supérieure ou égale à 1 mm.

Les matériaux de l'invention présentent une combinaison de propriétés intéressante : Par exemple, on peut obtenir par le procédé de l'invention un matériau comprenant une matrice polymérique à base de polymère choisi parmi les polymères thermoplastiques, les élastomères et les thermoplastiques élastomères présentant à la fois une porosité volumique supérieure ou égale à 40% et une conductivité thermique dans au moins une direction supérieure ou égale à 5W/m.K.

Selon une autre variante de l'invention, on peut obtenir des matériaux comprenant une matrice polymérique à base de polymère choisi parmi les polymères thermoplastiques, les élastomères et les thermoplastiques élastomères, des charges conductrices thermiques, et présentant une conductivité thermique dans au moins une direction supérieure ou égale à 15 W/m.K.

Un avantage du matériau de l'invention par rapport aux matériaux de l'art antérieur, notamment les matériaux réticulés, est qu'il est transformable et peut être recyclé. On peut en particulier mettre en œuvre dans l'étape a) du procédé décrit ci-dessus un matériau composite poreux selon l'invention à base de polymère et de charges, en lui ajoutant une nouvelle phase sacrificielle, éventuellement d'autres polymères et charges additionnels, et procéder ainsi à un nouveau cycle de transformation.

Les applications visées sont différentes en fonction du type de charge qui a été choisi.

Dans un mode de mise en œuvre, on utilise des charges conductrices thermiques. Selon ce mode de réalisation, le matériau de l'invention peut être utilisé dans de nombreuses applications telles que : dissipateur de chaleur dans un équipement électronique (heat sink), boîtiers automobiles, boîtiers de lampes, notamment de LED, encapsulation de composants électroniques, boitiers de batteries, armoires électriques, serveurs.

Dans un autre mode de mise en œuvre, on utilise des charges conductrices électriques. Selon ce mode de réalisation, le matériau de l'invention peut être utilisé dans de nombreuses applications telles que : les câbles électriques, les revêtements pour le blindage électromagnétique, anti-foudre, la protection antistatique.

### - La composition polymérique :

La composition polymérique est une composition intermédiaire du procédé de l'invention obtenue à l'issue des étapes a) ou b) suivant qu'elle est encore à l'état fondu ou déjà mise en forme. C'est un précurseur du matériau composite poreux. Cette composition comprend au moins :
(A) une phase polymère transformable par voie fondue, avantageusement à base de polymères choisis parmi les polymères thermoplastiques, les élastomères et les thermoplastiques élastomères,
(B) une charge choisie parmi les charges conductrices thermiques et les charges conductrices électriques
(C) une phase polymérique sacrificielle,
les charges (B) représentant au moins 75 %, avantageusement au moins 80% en masse par rapport à la somme des masses du polymère (A) et des charges (B), la phase polymérique sacrificielle (C) représentant au moins 15 % en masse par rapport à la somme des masses de (A), (B) et (C).

Avantageusement, la composition polymérique comprend, en masse par rapport à la masse totale de la composition :
(A) 1 à 15 % de phase polymère à base de polymères choisis parmi les polymères thermoplastiques, les élastomères et les thermoplastiques élastomères,
(B) 35 à 70 % de charge(s) choisie(s) parmi les charges conductrices thermiques et les charges conductrices électriques
(C) 20 à 60 % de phase polymérique sacrificielle
(D) 0 à 3% d'additifs.

Encore plus avantageusement, la composition polymérique consiste essentiellement, en masse par rapport à la masse totale de la composition, en :
(A) 1 à 15 % de phase polymère à base de polymères choisis parmi les polymères thermoplastiques, les élastomères et les thermoplastiques élastomères,
(B) 35 à 70 % de charge(s) choisie(s) parmi les charges conductrices thermiques et les charges conductrices électriques
(C) 20 à 60 % de phase polymérique sacrificielle
(D) 0 à 3 % d'additifs.

Cette composition polymérique peut être préparée et mise en forme directement sous la forme souhaitée pour l'utilisation (film, boîtier, etc...).

De façon alternative, on prévoit un mode de réalisation où la composition est préparée (mélange homogène en voie fondue des composants (A), (B) et (C)) et mise sous forme de granulés par exemple. Cette composition est ensuite facilement réintroduite dans le procédé de l'invention à l'étape a). Ce mode de réalisation permet de fournir une composition prête à être mise en œuvre qui ne nécessite pas de dosage des composants et évite les erreurs de manipulation liées à l'introduction des composants dans le mélangeur.

### - Procédé de fabrication d'un matériau carboné poreux conducteur thermique et/ou conducteur électrique :

Selon un mode de réalisation de l'invention, le matériau composite obtenu à l'issue du procédé décrit ci-dessus peut encore être transformé par application d'un traitement de pyrolyse ou de graphitisation. De façon connue, un tel traitement est réalisé à une température supérieure ou égale à 500°C, respectivement supérieure ou égale à 1000°C. Pour cela, le choix de la phase polymérique formant liant doit avoir été adapté pour permettre cette étape. On obtient ainsi un matériau carboné comportant une quantité élevée de charges conductrices thermiques ou conductrices électriques et doté d'une porosité et d'une densité contrôlées.

Un tel matériau peut être utilisé pour les applications suivantes : encapsulation de composants électroniques, boitiers de batteries, armoires électriques, serveurs.

### Partie expérimentale :

### I- Matériaux et méthodes :

### 1.1 Matériaux :

### Polymère formant liant :

PL 1 : polyacrylonitrile commercialisé par la société Ineos sous la référence Barex 210 ®
PL2 : élastomère HNBR (acrylonitrile-butadiène hydrogéné) commercialisé par la société Zeon Chemicals sous la référence Zetpol 2010L ®

### Polymère sacrificiel :

PS 1 : polypropylène carbonate commercialisé par la société Novomer sous la référence Polyol 211-10 ®
PS 2 : polypropylène carbonate commercialisé par la société Empower Materials sous la référence QPAC40 ®

### Charge conductrice thermique :

C1 : Graphite commercialisé par la société Timcal sous la référence C-therm 001 ©
C2 : Nitrure d'aluminium
Extrudeuse : Coperion ZSK18
Mélangeur interne : Scamex de 300ml

### I.2. Méthodes de test et de caractérisation :

### Conductivité thermique :

Les matériaux ont été caractérisés à la température ambiante et dans le plan par la méthode du hotdisk TPS plaque mince en suivant la norme NI IS022007-2 : 2008-12 plastique.

### Densité :

Pour évaluer la densité, on a mesuré la masse du matériau sur une balance de précision et le volume au pied à coulisse, le tout à température ambiante.

### II. Compositions polymériques et matériaux composites :

Dans les tableaux de compositions, les colonnes « Avant extraction » décrivent les proportions de la composition avant l'étape c) d'élimination de la phase sacrificielle, les colonnes « Après extraction » décrivent le matériau obtenu après l'étape c).

### II.1 Exemple 1

### Formulation :

Un mélange ayant la composition suivante a été préparé :

**Tableau 1.1**

| | Avant extraction | | Après extraction | |
|---|---|---|---|---|
| Composition | %masse | %volume | %masse | %volume |
| PL1 | 13.2 | 17.4 | 19.9 | 29.1 |
| PS1 | 13.8 | 16.5 | 0 | 0 |
| PS2 | 19.8 | 23.8 | 0 | 0 |
| C1 | 53.2 | 42.3 | 80.1 | 70.9 |

### Méthode de préparation :

### - Etape a : Préparation de la composition et extrusion d'un film de matériau composite

La composition a été préparée en utilisant une extrudeuse bi-vis à 175°C. Toutes les matières premières ont été directement injectées dans l'extrudeuse grâce aux doseurs gravimétriques pour les poudres et les granulés, et par une aiguille d'injection pour les liquides. Les débits massiques de chaque composant ont été réglés de manière à obtenir la composition décrite ci-dessus.

### - Etape b : Mise en forme

L'utilisation d'une pompe à engrenages à la suite de l'extrudeuse bi-vis a permis d'extruder des films de 2 mm d'épaisseur en continu. Le film a été découpé sous forme d'échantillons de dimension 5 cm x 5 cm.

### - Etape c : Elimination de la phase sacrificielle

L'échantillon de film précédemment obtenu a été soumis à une étape de décomposition de la phase sacrificielle en étuve sous air à 230°C pendant 20 mn. La mesure de la différence de masse avant et après le traitement thermique permet de suivre et de contrôler l'élimination du polypropylène carbonate. 100% du polypropylène carbonate initialement incorporé dans le mélange est décomposé et éliminé. On obtient un matériau poreux constitué de polymère formant liant PL1 et de charge C1 dans les proportions du tableau 1.1, et dont la porosité représente environ 40% en volume par rapport au volume total du matériau.

### - Etape d : Compression

Le matériau poreux obtenu à l'étape précédente a été comprimé sous presse à plateaux à 80°C et 80 bars jusqu'à une épaisseur de 1.5 cm ce qui conduit à une réduction de la porosité très importante.

### - Etape e : Pyrolyse

Le matériau est placé dans un four et soumis à un traitement de pyrolyse à 600°C pendant 5 heures afin de pyrolyser le liant polyacrylonitrile.

### Propriétés :

A chaque étape un échantillon a été prélevé et on a mesuré l'évolution de la conductivité thermique. Les conductivités thermiques obtenues à la fin de chaque étape de procédé sont rapportées dans le tableau 1.2.

**Tableau 1.2**

| Traitement | Conductivité thermique radiale (W/m.K) |
|---|---|
| Etape a (mélange et extrusion) | 16.6 |
| Etape c (élimination de la phase sacrificielle) | 12.5 |
| Etape d (compression) | 16.9 |
| Etape e (pyrolyse) | 17.1 |

### II.1 Exemple 2

### Formulation :

Un mélange ayant la composition suivante a été préparé :

**Tableau 2.1**

| | Avant extraction | | Après extraction | |
|---|---|---|---|---|
| Composition | % masse | % volume | % masse | % volume |
| PL2 | 3.7 | 5.9 | 6.1 | 11.3 |
| PS1 | 25.1 | 30.7 | 0 | 0 |
| PS2 | 13.5 | 16.6 | 0 | 0 |
| C1 | 57.7 | 46.8 | 93.9 | 88.7 |

### Méthode de préparation :

### - Etape a : Préparation de la composition et formation d'un film de matériau composite

La composition a été préparée en utilisant un mélangeur interne à 80°C. Le polymère formant liant PL2 et le polypropylène sacrificiel PS2 ont été introduits et mélangés en premier afin d'obtenir un mélange fondu plastifié. Ensuite les charges minérales C1 ont été ajoutées progressivement avec ajout régulier du polymère sacrificiel PS1 (un préchauffage, à environ 60°C, de la matière peut être nécessaire afin d'en diminuer la viscosité et faciliter l'ajout) jusqu'à obtention d'un mélange homogène.

### - Etape b : Mise en forme

Le mélange précédemment obtenu a ensuite été calandré sous forme d'une feuille d'épaisseur 0,5 cm. Le film obtenu a été découpé sous forme d'échantillons de dimension 5 cm x 5 cm.

### - Etape c : Elimination de la phase sacrificielle

L'échantillon de film précédemment obtenu a été soumis à une étape de décomposition de la phase sacrificielle en étuve sous air à 230°C pendant 20 mn. La mesure de la différence de masse avant et après le traitement thermique permet de suivre et de contrôler l'élimination du polypropylène carbonate. 100% du polypropylène carbonate initialement incorporé dans le mélange est décomposé et éliminé. On observe une expansion volumique du matériau au cours de cette étape. On obtient un matériau poreux constitué de polymère formant liant PL2 et de charge C1 dans les proportions du tableau 2.1.

### - Etape d : Compression

Le mélange est comprimé sous presse à 80°C et 50 bars jusqu'à une épaisseur de film de 0,5cm afin de retrouver l'épaisseur originelle. En effet lors de la décomposition on observe un léger gonflement du mélange. Le matériau après compression présente une densité de 0.844 g/cm³ au lieu de 1.80 g/cm³ théorique (la densité théorique est calculée à partir de la formulation et de la densité de chaque élément). On déduit de la mesure de la densité que le matériau obtenu présente une porosité de 53% en volume par rapport au volume total du matériau.

### Propriétés :

A l'issue de l'étape d, on a mesuré la conductivité thermique du matériau dans le sens radial et dans le sens axial. Les conductivités thermiques obtenues sont rapportées dans le tableau 2.2.

**Tableau 2.2**

| Sens | Conductivité thermique (W/m.K) |
|---|---|
| Radial | 16.0 |
| Axial | 1.49 |

On constate que le matériau obtenu cumule plusieurs propriétés : une haute conductivité thermique, une orientation des charges ainsi qu'une faible densité.

### II.3 Exemple 3

### Formulation :

Un mélange ayant la composition suivante (colonne « Avant extraction ») a été préparé :

**Tableau 3.1**

| | Avant extraction | | Après extraction | |
|---|---|---|---|---|
| Composition | % masse | % volume | % masse | % volume |
| PL2 | 3.1 | 5.1 | 4.6 | 8.7 |
| PS1 | 21.0 | 26.5 | 0 | 0 |
| PS2 | 11.3 | 14.3 | 0 | 0 |
| C1 | 64.6 | 54.1 | 95.4 | 91.3 |

### Méthode de préparation :

### - Etape a : Préparation de la composition et formation d'un film de matériau composite

On a procédé comme à l'étape a de l'exemple 2.

### - Etape b : Mise en forme

Le mélange obtenu a ensuite été calandré sous forme d'une feuille d'épaisseur 0,5cm.

### - Etape c : Elimination de la phase sacrificielle

On a procédé comme à l'étape c de l'exemple 2. On observe une expansion volumique du matériau au cours de cette étape. On obtient un matériau poreux constitué de polymère formant liant PL2 et de charge C1 dans les proportions du tableau 3.1 (colonne « Après extraction »).

### - Etape d : Compression

Le mélange est comprimé sous presse à 80°C et 50 bars jusqu'à une épaisseur de film de 0,5cm afin de retrouver l'épaisseur originelle. En effet lors de la décomposition on observe un léger gonflement du mélange. Le matériau après compression présente une densité de 1.05 g/cm³ au lieu de 1.82 g/cm³ théorique. On déduit de la mesure de la densité que le matériau obtenu présente une porosité de 42% en volume par rapport au volume total du matériau.

### Propriétés :

A l'issue de l'étape d, on a mesuré la conductivité thermique du matériau dans le sens radial et dans le sens axial. Les conductivités thermiques obtenues sont rapportées dans le tableau 3.2.

**Tableau 3.2**

| Sens | Conductivité thermique (W/m.K) |
|---|---|
| Radial | 22.4 |
| Axial | 1.55 |

On constate que le matériau obtenu cumule plusieurs propriétés : une haute conductivité thermique, une orientation des charges ainsi qu'une faible densité.

### II.4 Exemple 4

### Formulation :

Un mélange ayant la composition suivante (colonne « Avant extraction ») a été préparé :

**Tableau 4.1**

| | Avant extraction | | Après extraction | |
|---|---|---|---|---|
| Composition | % masse | % volume | % masse | % volume |
| PL2 | 4.2 | 9.0 | 5.0 | 15.0 |
| PS1 | 7.7 | 20.0 | 0 | 0 |
| PS2 | 7.6 | 20.0 | 0 | 0 |
| C2 | 80.5 | 51.0 | 95.0 | 85.0 |

### Méthode de préparation :

### - Etape a : Préparation de la composition et formation d'un film de matériau composite

On a procédé comme à l'étape a de l'exemple 2.

### - Etape b : Mise en forme

Le mélange obtenu a ensuite été calandré sous forme d'une feuille d'épaisseur 1cm.

### - Etape c : Elimination de la phase sacrificielle

On a procédé comme à l'étape c de l'exemple 2. Aucune expansion volumique du matériau au cours de cette étape n'est à noter. On obtient un matériau poreux constitué de polymère formant liant PL2 et de charge C2 dans les proportions du tableau 3.1 (colonne « Après extraction »).

### - Etape d : Compression

Le mélange est comprimé sous presse à 80°C jusqu'à une épaisseur de film de 1 cm afin d'assurer l'épaisseur originelle même si aucun gonflement du mélange n'est observé.

## Revendications

1. Procédé de préparation d'un matériau composite poreux comprenant au moins (A) une phase polymérique formant liant et (B) une ou plusieurs charges choisies parmi :
les charges conductrices thermiques présentant une conductivité thermique supérieure ou égale à 5 W/mK, et les charges conductrices électriques présentant une résistivité inférieure ou égale à 0.1 Ohm.cm,
les charges (B) représentant au moins 75%, avantageusement au moins 80% en masse par rapport à la somme des masses de la phase polymérique (A) et des charges (B), ce procédé comprenant les étapes suivantes :
a) Mélangeage à chaud par voie fondue de la phase polymérique (A), des charges (B), et d'une phase polymérique sacrificielle (C), de façon à obtenir un mélange,
b) Mise en forme du mélange,
c) Elimination de la phase polymérique sacrificielle,
et la phase polymérique sacrificielle (C) représente au moins 15 % en masse de la masse totale du mélange de l'étape a),
le matériau composite poreux comprenant, en masse par rapport à la masse totale du matériau, de 0 à 5 % d'un ou plusieurs résidus de décomposition de la phase sacrificielle.

2. Procédé selon la revendication 1, dans lequel la phase polymérique sacrificielle (C) représente de 20 à 80 % en masse de la masse totale du mélange de l'étape a).

3. Procédé selon l'une quelconque des revendications précédentes dans lequel l'étape a) est mise en œuvre dans un mélangeur interne ou dans une extrudeuse.

4. Procédé selon l'une quelconque des revendications précédentes dans lequel l'étape c) est mise en œuvre par décomposition par voie thermique de la phase polymérique sacrificielle.

5. Procédé selon la revendication 4 dans lequel la phase polymérique sacrificielle est à base d'au moins un polymère choisi parmi les polyalcènes carbonates, de préférence parmi les polyéthylènes carbonates et les polypropylènes carbonates.

6. Procédé selon l'une quelconque des revendications précédentes dans lequel la phase polymérique formant liant est à base d'au moins un polymère choisi parmi : les thermoplastiques, les élastomères, les élastomères thermoplastiques, avantageusement parmi : le polyacrylonitrile, les polyoléfines, les polymères halogénés, les polymères acryliques, les acrylates, les méthacrylates, les vinyl acétates, les polyéthers, les polyesters, les polyamides, les polymères aromatiques, l'acrylonitrile-butadiène hydrogéné, les copolymères d'éthylène et d'un acrylate d'alkyle, le polyisoprène, les caoutchoucs.

7. Procédé selon l'une quelconque des revendications précédentes dans lequel les charges sont choisies parmi : le nitrure d'aluminium, le nitrure de bore, le nitrure de magnésium et de silicium, le carbure de silicium, le diamant, et leurs mélanges.

8. Procédé selon l'une quelconque des revendications 1 à 6, dans lequel les charges sont choisies parmi : le graphite, le graphène, les nanotubes de carbone (CNT), le noir de carbone, les charges métalliques comme l'aluminium, le cuivre ou l'argent et leurs mélanges.

9. Procédé selon l'une quelconque des revendications précédentes dans lequel l'étape b) comporte un façonnage sous forme de film.

10. Procédé selon l'une quelconque des revendications précédentes qui comporte en outre à l'issue de l'étape c) une étape d) de compression.

11. Matériau composite poreux susceptible d'être obtenu par un procédé selon l'une quelconque des revendications 1 à 10, qui présente la composition suivante, en masse par rapport à la masse totale du matériau :
• 3 à 25 % d'au moins un polymère choisi parmi les polymères thermoplastiques, les élastomères et les thermoplastiques élastomères,
• 75 à 97 % d'au moins une charge choisie parmi les charges conductrices thermiques présentant une conductivité thermique supérieure ou égale à 5 W/mK, et les charges conductrices électriques présentant une résistivité inférieure ou égale à 0,1 Ohm. cm,
• 0 à 5 % d'un ou plusieurs additifs ou résidus de décomposition de la phase sacrificielle.

12. Matériau composite poreux selon la revendication 11, qui est choisi parmi un matériau autosupporté et un revêtement d'une épaisseur supérieure ou égale à 250 µm.

13. Matériau susceptible d'être obtenu par un procédé selon la revendication 10, comprenant une matrice polymérique à base de polymère choisi parmi les polymères thermoplastiques, les élastomères et les thermoplastiques élastomères, des charges conductrices thermiques, et présentant une conductivité thermique dans au moins une direction supérieure ou égale à 15 W/m.K.

14. Composition polymérique susceptible d'être obtenue à l'issue de l'étape a) ou de l'étape b) du procédé selon l'une quelconque des revendications 1 à 9, cette composition comprenant au moins :
(A) une phase polymérique à base de polymères choisis parmi les polymères thermoplastiques, les élastomères et les thermoplastiques élastomères,
(B) une ou plusieurs charges choisies parmi les charges conductrices thermiques présentant une conductivité thermique supérieure ou égale à 5 W/mK, et les charges conductrices électriques présentant une résistivité inférieure ou égale à 0,1 Ohm.cm,
(C) une phase polymérique sacrificielle,
la ou les charges (B) représentant au moins 75%, avantageusement au moins 80% en masse par rapport à la somme des masses du polymère (A) et des charges (B), la phase polymérique sacrificielle (C) représentant au moins 15 % en masse par rapport à la somme des masses de (A), (B) et (C).

15. Procédé de fabrication d'un matériau carboné poreux conducteur thermique et/ou conducteur électrique, ce procédé comportant la mise en œuvre du procédé selon l'une quelconque des revendications 1 à 10 et comportant en outre à l'issue de ce procédé au moins une étape e) de pyrolyse ou de graphitisation.

## Patentansprüche

1. Verfahren zur Herstellung eines porösen Verbundmaterials, umfassend mindestens (A) eine Polymerphase, die ein Bindemittel bildet, und (B) einen oder mehrere Füllstoffe, ausgewählt aus:
wärmeleitenden Füllstoffen mit einer Wärmeleitfähigkeit von mehr als oder gleich 5 W/mK und elektrisch leitenden Füllstoffen mit einem spezifischen Widerstand von weniger als oder gleich 0,1 Ohm.cm,
wobei die Füllstoffe (B) mindestens 75 Gew.-%, vorteilhafterweise mindestens 80 Gew.-%, bezogen auf die Summe der Gewichte der Polymerphase (A) und der Füllstoffe (B), ausmachen, wobei das Verfahren die folgenden Schritte umfasst:
a) Heißschmelzmischen der Polymerphase (A), der Füllstoffe (B) und einer Polymer-Opferphase (C) zur Herstellung eines Gemischs,
b) Formen des Gemischs,
c) Entfernen der Polymer-Opferphase,
und die Polymer-Opferphase (C) mindestens 15 Gew.-%, bezogen auf das Gesamtgewicht des Gemischs von Schritt a), ausmacht,
wobei das poröse Verbundmaterial 0 bis 5 Gew.-% eines oder mehrerer Zersetzungsrückstände der Opferphase, bezogen auf das Gesamtgewicht des Materials, umfasst.

2. Verfahren nach Anspruch 1, wobei die Polymer-Opferphase (C) 20 bis 80 Gew.-%, bezogen auf das Gesamtgewicht des Gemischs von Schritt a), ausmacht.

3. Verfahren nach einem der vorhergehenden Ansprüche, wobei Schritt a) in einem Innenmischer oder einem Extruder durchgeführt wird.

4. Verfahren nach einem der vorhergehenden Ansprüche, wobei Schritt c) durch thermische Zersetzung der Polymer-Opferphase durchgeführt wird.

5. Verfahren nach Anspruch 4, wobei die Polymer-Opferphase auf mindestens einem aus Polyalkencarbonaten, vorzugsweise aus Polyethylencarbonaten und Polypropylencarbonaten, ausgewählten Polymer basiert.

6. Verfahren nach einem der vorhergehenden Ansprüche, wobei die das Bindemittel bildende Polymerphase auf mindestens einem Polymer basiert, ausgewählt aus: Thermoplasten, Elastomeren, thermoplastischen Elastomeren, vorteilhafterweise aus: Polyacrylnitril, Polyolefinen, halogenierten Polymeren, Acrylpolymeren, Acrylaten, Methacrylaten, Vinylacetaten, Polyethern, Polyestern, Polyamiden, aromatischen Polymeren, hydriertem Acrylnitril/Butadien, Copolymeren von Ethylen und einem Alkylacrylat, Polyisopren, Kautschuken.

7. Verfahren nach einem der vorhergehenden Ansprüche, wobei die Füllstoffe ausgewählt sind aus: Aluminiumnitrid, Bornitrid, Magnesiumsiliziumnitrid, Siliziumcarbid, Diamant und deren Gemischen.

8. Verfahren nach einem der Ansprüche 1 bis 6, wobei die Füllstoffe ausgewählt sind aus: Graphit, Graphen, Kohlenstoffnanoröhren (CNT), Ruß, metallischen Füllstoffen, wie Aluminium, Kupfer oder Silber, und deren Gemischen.

9. Verfahren nach einem der vorhergehenden Ansprüche, wobei Schritt b) eine Verarbeitung in Form einer Folie beinhaltet.

10. Verfahren nach einem der vorhergehenden Ansprüche, das ferner nach Schritt c) noch einen Komprimierungsschritt d) beinhaltet.

11. Poröses Verbundmaterial, das durch ein Verfahren nach einem der Ansprüche 1 bis 10 erhältlich ist und die folgende Zusammensetzung, bezogen auf das Gesamtgewicht des Materials, umfasst:
• 3 bis 25 Gew.-% mindestens eines Polymers, ausgewählt aus thermoplastischen Polymeren, Elastomeren und thermoplastischen Elastomeren,
• 75 bis 97 Gew.-% mindestens eines Füllstoffs, ausgewählt aus wärmeleitenden Füllstoffen mit einer Wärmeleitfähigkeit von mehr als oder gleich 5 W/mK und elektrisch leitenden Füllstoffen mit einem spezifischen Widerstand von weniger als oder gleich 0,1 Ohm.cm,
• 0 bis 5 Gew.-% eines oder mehrerer Additive oder Zersetzungsrückstände der Opferphase.

12. Poröses Verbundmaterial nach Anspruch 11, das aus einem selbsttragenden Material und einer Beschichtung mit einer Dicke von mehr als oder gleich 250 µm ausgewählt ist.

13. Material, das durch ein Verfahren nach Anspruch 10 erhältlich ist und eine auf einem aus thermoplastischen Polymeren, Elastomeren und thermoplastischen Elastomeren ausgewählten Polymer basierende Polymermatrix und wärmeleitende Füllstoffe mit einer Wärmeleitfähigkeit in mindestens einer Richtung von mehr als oder gleich 15 W/m.K umfasst.

14. Polymerzusammensetzung, die nach Schritt a) oder nach Schritt b) des Verfahrens nach einem der Ansprüche 1 bis 9 erhältlich ist, wobei die Zusammensetzung mindestens Folgendes umfasst:
(A) eine Polymerphase auf der Basis von aus thermoplastischen Polymeren, Elastomeren und thermoplastischen Elastomeren ausgewählten Polymeren,
(B) einen oder mehrere Füllstoffe, ausgewählt aus wärmeleitenden Füllstoffen mit einer Wärmeleitfähigkeit von mehr als oder gleich 5 W/mK und elektrisch leitenden Füllstoffen mit einem spezifischen Widerstand von weniger als oder gleich 0,1 Ohm.cm,
(C) eine Polymer-Opferphase (C),
wobei der bzw. die Füllstoff(e) (B) mindestens 75 Gew.-%, vorteilhafterweise mindestens 80 Gew.-%, bezogen auf die Summe der Gewichte des Polymers (A) und der Füllstoffe (B), ausmachen und die Polymer-Opferphase (C) mindestens 15 Gew.-%, bezogen auf die Summe der Gewichte von (A), (B) und (C), ausmacht.

15. Verfahren zur Herstellung eines porösen kohlenstoffhaltigen wärmeleitenden und/oder elektrisch leitenden Materials, wobei das Verfahren die Durchführung des Verfahrens nach einem der Ansprüche 1 bis 10 umfasst und ferner nach diesem Verfahren mindestens einen Schritt e) der Pyrolyse oder Graphitierung umfasst.

## Claims

1. Process for the preparation of a porous composite material comprising at least (A) a binder-forming polymeric phase and (B) one or more fillers chosen from:
thermally conductive fillers exhibiting a thermal conductivity of greater than or equal to 5 W/mK and electrically conductive fillers exhibiting a resistivity of less than or equal to 0.1 ohm.cm,
the fillers (B) representing at least 75%, advantageously at least 80%, by weight, with respect to the sum of the weights of the polymeric phase (A) and of the fillers (B), this process comprising the following stages:
a) hot mixing, by the molten route, the polymeric phase (A), the fillers (B) and a sacrificial polymeric phase (C), so as to obtain a mixture,
b) shaping the mixture,
c) removing the sacrificial polymeric phase,
and the sacrificial polymeric phase (C) represents at least 15% by weight of the total weight of the mixture of stage a),
the porous composite material comprising, by weight, with respect to the total weight of the material, from 0% to 5% of one or more decomposition residues from the sacrificial phase.

2. Process according to Claim 1, in which the sacrificial polymeric phase (C) represents from 20% to 80% by weight of the total weight of the mixture of stage a).

3. Process according to either one of the preceding claims, in which stage a) is carried out in an internal mixer or in an extruder.

4. Process according to any one of the preceding claims, in which stage c) is carried out by decomposition by the thermal route of the sacrificial polymeric phase.

5. Process according to Claim 4, in which the sacrificial polymeric phase is based on at least one polymer chosen from polyalkene carbonates, preferably from polyethylene carbonates and polypropylene carbonates.

6. Process according to any one of the preceding claims, in which the binder-forming polymeric phase is based on at least one polymer chosen from: thermoplastics, elastomers, thermoplastic elastomers, advantageously from: polyacrylonitrile, polyolefins, halogenated polymers, acrylic polymers, acrylates, methacrylates, vinyl acetates, polyethers, polyesters, polyamides, aromatic polymers, hydrogenated acrylonitrile/butadiene, copolymers of ethylene and of an alkyl acrylate, polyisoprene or rubbers.

7. Process according to any one of the preceding claims, in which the fillers are chosen from: aluminium nitride, boron nitride, magnesium silicon nitride, silicon carbide, diamond, and their mixtures.

8. Process according to any one of Claims 1 to 6, in which the fillers are chosen from: graphite, graphene, carbon nanotubes (CNTs), carbon black, metal fillers, such as aluminium, copper or silver, and their mixtures.

9. Process according to any one of the preceding claims, in which stage b) comprises a fashioning in the film form.

10. Process according to any one of the preceding claims, which additionally comprises, on conclusion of stage c), a compression stage d).

11. Porous composite material capable of being obtained by the process according to any one of Claims 1 to 10, which exhibits the following composition, by weight, with respect to the total weight of the material:
• from 3% to 25% of at least one polymer chosen from thermoplastic polymers, elastomers and thermoplastic elastomers,
• from 75% to 97% of at least one filler chosen from thermally conductive fillers exhibiting a thermal conductivity of greater than or equal to 5 W/mK and electrically conductive fillers exhibiting a resistivity of less than or equal to 0.1 ohm.cm,
• from 0% to 5% of one or more additives or decomposition residues from the sacrificial phase.

12. Porous composite material according to Claim 11, which is chosen from a self-supported material and a coating with a thickness of greater than or equal to 250 µm.

13. Material capable of being obtained by the process according to Claim 10, comprising a polymeric matrix, based on polymer chosen from thermoplastic polymers, elastomers and thermoplastic elastomers, and thermally conductive fillers and exhibiting a thermal conductivity in at least one direction of greater than or equal to 15 W/m.K.

14. Polymeric composition capable of being obtained on conclusion of stage a) or of stage b) of the process according to any one of Claims 1 to 9, this composition comprising at least:
(A) a polymeric phase based on polymers chosen from thermoplastic polymers, elastomers and thermoplastic elastomers,
(B) one or more fillers chosen from thermally conductive fillers exhibiting a thermal conductivity of greater than or equal to 5 W/mK and electrically conductive fillers exhibiting a resistivity of less than or equal to 0.1 ohm.cm,
(C) a sacrificial polymeric phase,
the filler or fillers (B) representing at least 75%, advantageously at least 80%, by weight, with respect to the sum of the weights of the polymer (A) and of the fillers (B), the sacrificial polymeric phase (C) representing at least 15% by weight, with respect to the sum of the weights of (A), (B) and (C).

15. Process for the manufacture of a thermally conductive and/or electrically conductive porous carbon-based material, this process comprising the implementation of the process according to any one of Claims 1 to 10 and additionally comprising, on conclusion of this process, at least one stage e) of pyrolysis or of graphitization.
